# EUROPEAN PATENT APPLICATION

(11) **EP 2 186 404 A2**
(43) Date of publication of application: **19.05.2010**
(21) Application number: 09252569.0
(22) Date of filing: 06.11.2009
(51) Int. Cl.: A01K 97/02

(54) **Apparatus for receiving bait for fishing**

(30) Priority: 07.11.2008 GB 0820430
(71) Applicant: Korda Developments LTD, Basildon Essex SS14 3DA (GB)
(72) Inventor: Bones, Alexander Richard, Allesley, Coventry CV5 7QB (GB); Clarke, Damian Keith, Colchester, Essex CO2 0RD (GB); Penning, Adam Heathcote, Chelmsford, Essex CM1 2EX (GB)
(74) Representative: Jones, Graham Henry

(57) **Abstract**

Apparatus (2) for receiving bait for fishing, which apparatus (2) comprises a body portion (4) for receiving the bait, and weight means (6) for causing the apparatus (2) to lie at the bottom of a fishing area with the body portion (4) uppermost, and the apparatus (2) being such that:
(i) the apparatus (2) has a flat base (8);
(ii) the body portion (4) is a part cylindrical body portion;
(iii) the weight means is positioned at a front part (10) of the body portion (4) and does not extend to a rear part (12) of the body portion (4), thereby aiding casting distance and accuracy;
(iv) the body portion (4) has a sloping front (14) for aiding release of the bait; and
(v) the body portion (4) has conduit means (16) for receiving elastic means of an elasticated hook system, thereby affording an angler the opportunity to use or not to use the elasticated hook system.

## Description

This invention relates to apparatus for receiving bait for fishing.

Known apparatus for receiving bait for fishing comprises a body portion for receiving the fishing bait, and weight means for causing the apparatus to lie at the bottom of a fishing area with the body portion uppermost. The bait may be fishing pellets or any other suitable and appropriate type of bait. The bait is loaded inside the body portion prior to casting. The bait is released when the apparatus is cast and it is lying at the bottom of a fishing area, for example on the bottom of a lake, river or canal. The known apparatus is limited in the distance that it can be cast.

It is an aim of the present invention to reduce the above mentioned problem.

Accordingly, in one non-limiting embodiment of the present invention there is provided apparatus for receiving bait for fishing, which apparatus comprises a body portion for receiving the bait, and weight means for causing the apparatus to lie at the bottom of a fishing area with the body portion uppermost, and the apparatus being such that:
(i) the apparatus has a flat base;
(ii) the body portion is a part cylindrical body portion;
(iii) the weight means is positioned at a front part of the body portion and does not extend to a rear part of the body portion, thereby aiding casting distance and accuracy;
(iv) the body portion has a sloping front for aiding release of the bait; and
(v) the body portion has conduit means for receiving elastic means of an elasticated hook system, thereby affording an angler the opportunity to use or not to use the elasticated hook system.

The apparatus of the present invention is advantageous in that the position and size of the weight means facilitates casting for longer distances than the known apparatus, and with increased accuracy. The apparatus is also advantageous in that the sloping front aids release of the bait from the front of the apparatus when in use. The apparatus is further advantageous in that the conduit means affords an angler the opportunity to use or not to use an elasticated hook system. If an elasticated hook system is used, then the elasticated hook system is not tied to the apparatus as occurs with the known apparatus. In the event of a line breakage, the apparatus of the present invention enables the fish to escape without having to tow the apparatus.

The apparatus may be one in which the body portion has a flat base, the weight means has a flat base, and the flat base of the body portion is positioned on the flat base of the weight means. Preferably the weight means extends across the flat base of the body portion and up the sides of the body portion. Other designs may be employed so that, for example, the body portion may have a curved base which fits into a concave recess on an upper part of the weight means. If desired, the weight means may just extend across the flat base of the body portion and not up the sides of the body portion. It is preferred that the weight means has the flat base in order to facilitate the apparatus stably lying at the bottom of the fishing area whilst the bait is released.

Preferably, the apparatus is one in which the end of the body portion opposite the sloping front is closed by at least one bar. The bar encourages the majority of the bait in the body portion to exit from the sloping front of the body portion.

The apparatus may be one in which there are two of the bars, and in which the bars are arranged in the shape of a cross. Preferably the cross has the bars at right angles. Other types of cross may be formed with the bars extending at other angles than right angles to each other. The bars are preferably of rectangular cross section but they may be of other cross sectional shapes if desired, for example square or circular cross sectional shapes.

Preferably, the apparatus is one in which the body portion has an apertured top part for facilitating release of the bait.

The apertured top part may comprise spaced apart curved members. Preferably there are three of the curved members defining two transversely extending slots. More or less than two of the curved members may be employed. The curved members may be of any suitable and appropriate cross sectional shape including, for example, rectangular, square and circular cross sectional shapes.

Preferably, the body portion has a smooth internal surface.

Preferably, the front part of the body portion is larger than the rear part of the body portion whereby the body portion tapers from the front part towards the rear part. The tapering of the body portion aids the release of the bait. The tapering of the body portion also aids planning upwards of the apparatus when the apparatus is being retrieved.

The weight means may be permanently secured to the body portion. Alternatively, the weight means may be removable from the body portion, thereby to allow the body portion to be provided with interchangeable weight means.

The apparatus may include a stem portion which extends from the rear part of the body portion. The step portion may combine with the weight means to enable the apparatus to be accurately cast, and also to be stable in flight. The stem may also combine with the weight means to enable the achievement of good casting distances.

The apparatus may be a multi-piece moulding. Alternatively, the apparatus may be a one-piece moulding.

The apparatus may be made in any suitable and appropriate size. Thus, for example, the apparatus may be made in a small size of 24g weight. The apparatus may also be made in a large size of 28g weight.

The apparatus may be made of any suitable and appropriate plastics materials. The weight means may be any suitable metal. The metal may be covered with a plastics material. The metal may be lead.

Embodiments of the invention will now be described solely by way of example and with reference to the accompanying drawings in which:
Figure 1 is a perspective view from the front and one side of first apparatus of the invention for receiving bait for fishing;
Figure 2 is an underneath perspective view of the apparatus shown in Figure 1;
Figure 3 is a top view of the apparatus shown in Figure 1;
Figure 4 is an end view of the apparatus shown in Figure 1;
Figure 5 is a perspective view of a body portion of the apparatus shown in Figure 1;
Figure 6 is a plan view of the underneath of the body portion shown in Figure 5;
Figure 7 is a top plan view of the body portion shown in Figure 5;
Figure 8 is an end view of the body portion shown in Figure 5;
Figure 9 is a side view of the body portion shown in Figure 5;
Figure 10 is a perspective view of weight means forming part of the apparatus shown in Figure 1;
Figure 11 is a perspective view of the underneath of the weight means shown in Figure 10;
Figure 12 is a perspective view like Figure 1 but shows second apparatus of the present invention;
Figure 13 is an underneath perspective view like Figure 2 but shows the second apparatus of Figure 12;
Figure 14 is a top plan view like Figure 3 but shows the second apparatus of Figure 12;
Figure 15 is an end view like Figure 4 but shows the second apparatus of Figure 12;
Figure 16 is a perspective view like Figure 5 but shows the second apparatus of Figure 12;
Figure 17 is a top plan view like Figure 7 but shows the second apparatus of Figure 12;
Figure 18 is an end view like Figure 8 but shows the second apparatus of Figure 12;
Figure 19 is a side view like Figure 9 but shows the second apparatus of Figure 12;
Figure 20 is a view like Figure 10 but shows weight means of the second apparatus of Figure 12; and
Figure 21 is a perspective view of the underneath of the weight means shown in Figure 20.

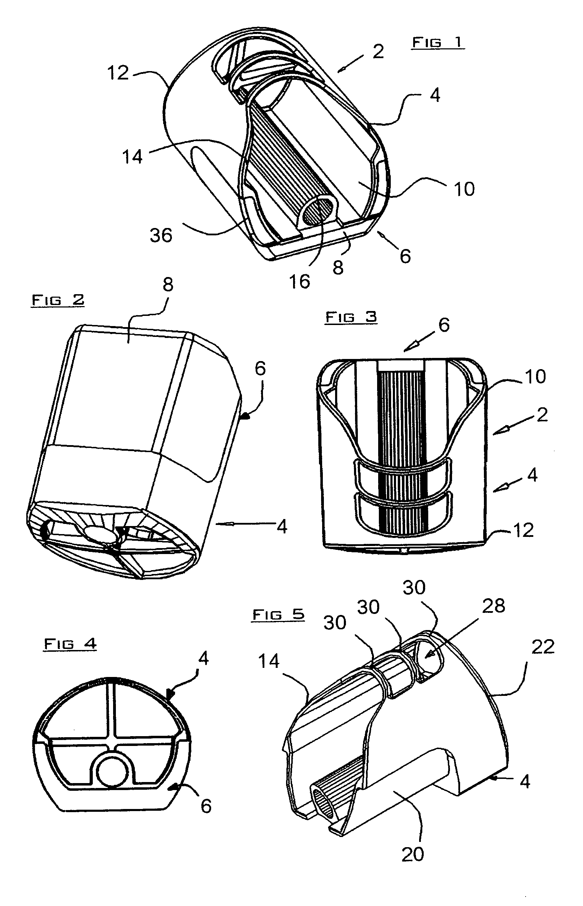

Referring to Figures 1 - 11, there is shown apparatus 2 for receiving bait for fishing. The bait may be fishing pellets or any other suitable and appropriate type of bait. The apparatus 2 comprises a body portion 4 for receiving the bait, and weight means 6 for causing the apparatus 2 to lie at the bottom of a fishing area with the body portion 4 uppermost. The fishing area may be, for example, the bottom of a lake, river or canal.

The apparatus 2 has a flat base 8 as shown. The body portion 4 is a part cylindrical body portion also as shown. As best appreciated from Figures 1 and 2, the weight means 6 is positioned at a front part 10 of the body portion 4. The weight means 6 does not extend to a rear part 12 of the body portion 4. The position of the weight means 6 aids casting distances, which can be greater than achievable with known apparatus. The position of the weight means also aids casting accuracy.

The body portion 4 has a sloping front 14. The sloping front 14 aids release of the bait.

The body portion 4 has conduit means 16 for receiving elastic means (not shown) of an elasticated hook system (not shown). The conduit means 16 affords an angler the opportunity to use or not to use the elasticated hook system. If the angler does choose to use the elasticated hook system, then the elastic means is not tied to the apparatus 2. Thus, in the event of a fishing line breakage, the fish escapes and does not have to tow with it the apparatus 2.

The body portion 4 has a flat base 18. The weight means 6 has the flat base 8. The flat base 18 of the body portion 4 is positioned on the flat base 8 of the weight means 6. The weight means 6 extends across the flat base 18 of the body portion 4 and up the sides 20 of the body portion 4 as shown in Figures 1 and 2.

The end 22 of the body portion 4 opposite the sloping front 14 is closed by two bars 24, 26. The two bars 24, 26 are arranged at right angles to each other and in the shape of a cross as shown. The bars are of rectangular cross section but they may be of other cross sectional shapes if desired.

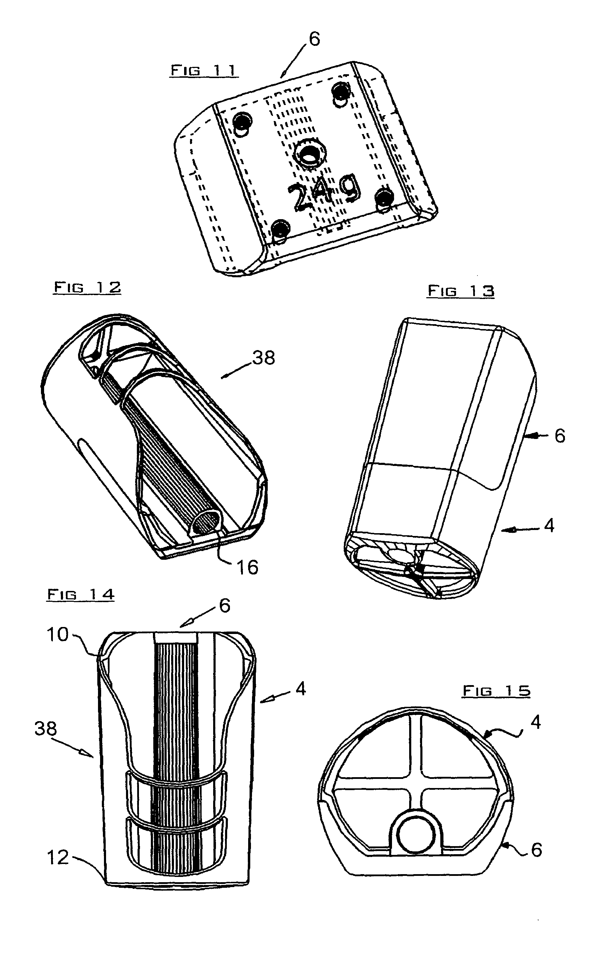

The body portion 4 has an apertured top part 28 for facilitating release of the bait. The apertured top part 28 comprises three spaced apart curved members 30 which define two transversely extending slots 32. The curved members 30 aid loading of the apparatus 2. The curved members 30 also offer support and grip to the bait loaded inside the body portion 4. The curved members 30 also provide rigidity for the body portion 4. The body portion 4 has a smooth internal surface. The front part 10 of the body portion 4 is larger than the rear part 12 of the body portion 4 whereby the body portion 4 tapers from the front part 10 to the rear part 12. This tapering is shown in Figures 3 and 14 where the front area "x" is larger than the rear area "y". The tapering of the body portion 4 aids the release of the bait, and also upwards planning of the apparatus 2 when the apparatus 2 is being retrieved.

The weight means 6 is permanently secured to the body portion 4. In an alternative embodiment of the invention not shown, the weight means may be removable from the body portion 4, thereby allowing the body portion 4 to be provided with interchangeable weight means.

The apparatus 2 is a multi-piece moulding. In an alternative embodiment of the invention, the apparatus may be a one-piece moulding.

The body portion 4 has a shoulder 34 against which the adjacent end of the weight means 6 abuts. It will be noticed from Figure 1 that the conduit means 16 terminates just short of the front of the body portion 4.

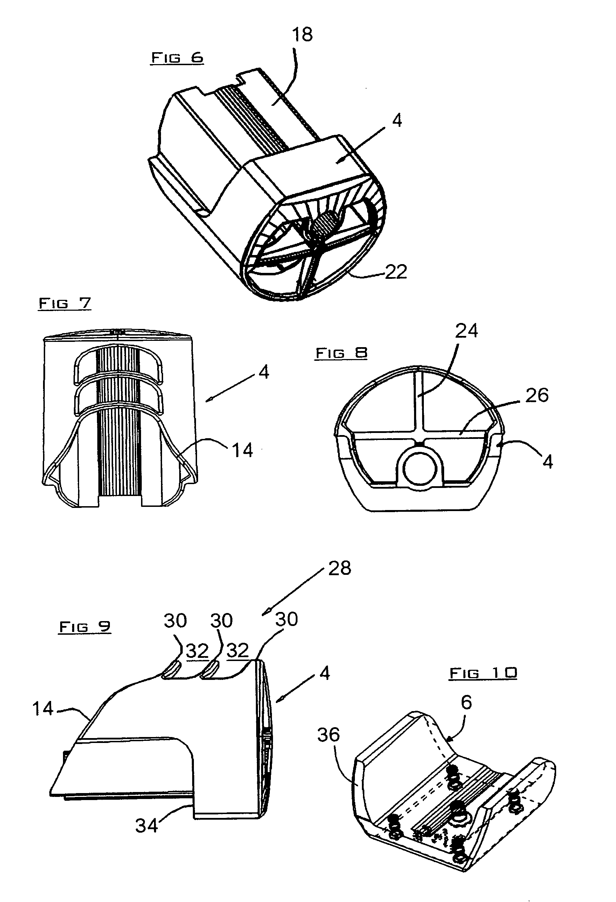

The shape of the weight means 6 is best appreciated from Figures 10 and 11. The weight means 6 has a sloping front edge 36 which enables this part of the weight means 6 to be of the same slope as the sloping front 14, as can be appreciated from Figure 1.

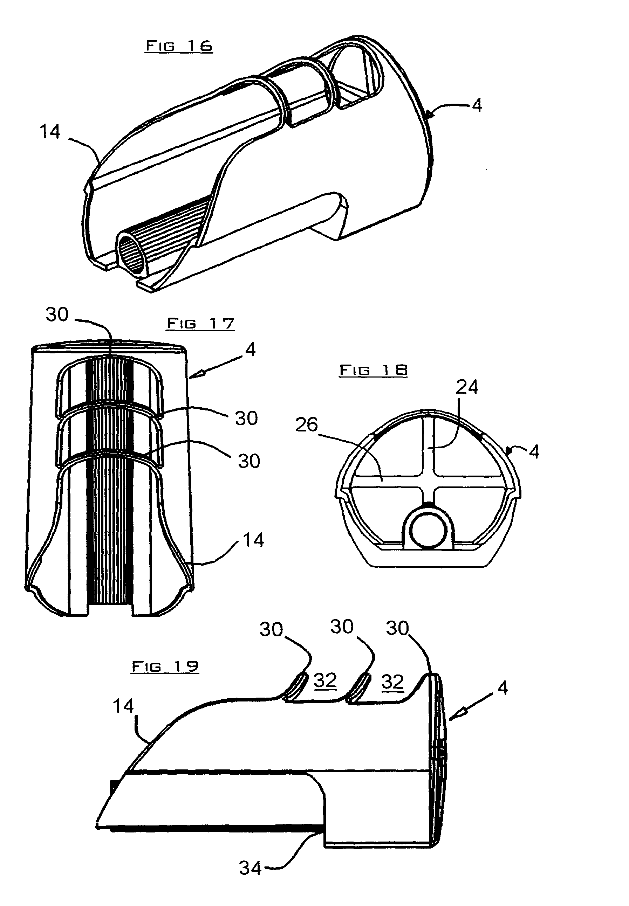

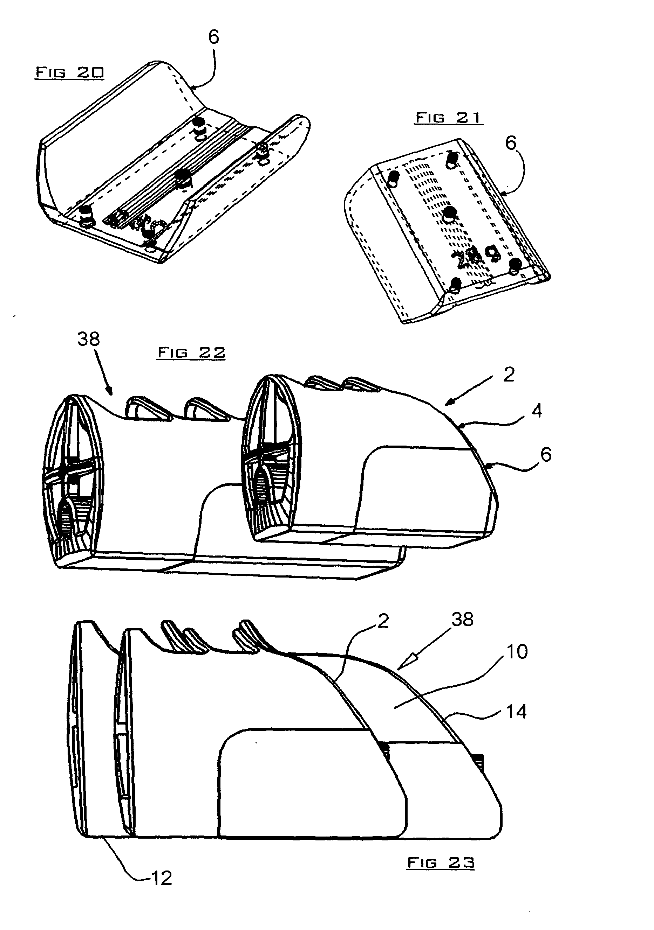

The apparatus 2 is a small feeder of 24g weight. Figures 12 - 21 show apparatus 38 which is of the same design as the apparatus 2 but which is produced as large apparatus of 28g weight. Similar parts in the apparatus 38 as in the apparatus 2 have been given the same reference numerals for ease of comparison and understanding. From a comparison of Figures 4 and 15, it will be seen that the body portion 4 of the apparatus 2 is more squat and slightly less circular than the body portion 4 of the apparatus 38. Figures 22 and 23 show the two pieces of apparatus 2, 38 side by side for shape-comparison purposes.

It is to be appreciated that the embodiments of the invention described above with reference to the accompanying drawings have been given by way of example only and that modifications may be effected. Thus, for example, the weight means 6 need not extend up the sides 20 of the body portion 4. More or less of the bars 24, 26 may be employed. More or less of the curved members 30 may be employed. For all aspects of the present invention, the weight means may be secured to the body portion by pegs, for example four pegs, protruding from the base of the body portion and locating in a corresponding number of holes in the weight means. Alternatively, the body portion may have holes, for example four holes, for accepting a portion may be peg up-stands attached to the weight portion. Individual components shown in the drawings are not limited to use in their drawings, and they may be used in other drawings and in all aspects of the invention.

## Claims

1. Apparatus for receiving bait for fishing, which apparatus comprises a body portion for receiving the bait, and weight means for causing the apparatus to lie at the bottom of a fishing area with the body portion uppermost, and the apparatus being such that:
(i) the apparatus has a flat base;
(ii) the body portion is a part cylindrical body portion;
(iii) the weight means is positioned at a front part of the body portion and does not extend to a rear part of the body portion, thereby aiding casting distance and accuracy;
(iv) the body portion has a sloping front for aiding release of the bait; and
(v) the body portion has conduit means for receiving elastic means of an elasticated hook system, thereby affording an angler the opportunity to use or not to use the elasticated hook system.

2. Apparatus according to claim 1 in which the body portion has a flat base, the weight means has a flat base, and the flat base of the body portion is positioned on the flat base of the weight means.

3. Apparatus according to claim 2 in which the weight means extends across the flat base of the body portion and up the sides of the body portion.

4. Apparatus according to any one of the preceding claims in which the end of the body portion opposite the sloping front is closed by at least one bar.

5. Apparatus according to claim 4 in which there are two of the bars, and in which the bars are arranged in the shape of a cross.

6. Apparatus according to claim 5 in which the cross has the bars at right angles.

7. Apparatus according to any one of the preceding claims in which the body portion has an apertured top part for facilitating release of the bait.

8. Apparatus according to claim 7 in which the apertured top part comprises spaced apart curved members.

9. Apparatus according to claim 8 in which there are three of the curved members defining two transversely extending slots.

10. Apparatus according to any one of the preceding claims in which the body portion has a smooth internal surface.

11. Apparatus according to any one of the preceding claims in which the front part of the body portion is larger than the rear part of the body portion whereby the body portion tapers from the front part towards the rear part.

12. Apparatus according to any one of the preceding claims in which the weight means is permanently secured to the body portion.

13. Apparatus according to any one of claims 1 - 11 in which the weight means is removable from the body portion, thereby to allow the body portion to be provided with interchangeable weight means.

14. Apparatus according to any one of the preceding claims and including a step portion which extends from the rear part of the body portion.

15. Apparatus according to any one of the preceding claims in which the apparatus is a multi-piece moulding or a one-piece moulding.
